(19) Europäisches Patentamt
European Patent Office
Office européen des brevets

(11) EP 0 630 482 B1

# (12) FASCICULE DE BREVET EUROPEEN

(45) Date de publication et mention de la délivrance du brevet:
**15.01.1997 Bulletin 1997/03**

(21) Numéro de dépôt: **93918758.9**

(22) Date de dépôt: **10.03.1993**

(51) Int Cl.6: **G01S 3/80**, G01S 3/14

(86) Numéro de dépôt international:
**PCT/FR93/00240**

(87) Numéro de publication internationale:
**WO 93/18416 (16.09.1993 Gazette 1993/22)**

## (54) PROCEDE ET DISPOSITIF DE LOCALISATION DE BRUITEURS PAR UNE ANTENNE CONSTITUEE DE BOUEES ACOUSTIQUES PASSIVES

VERFAHREN UND VORRICHTUNG ZUR LOKALISIERUNG VON SCHALLERZEUGENDEN VORRICHTUNGEN MIT EINER ANTENNE AUS PASSIVEN FUNK-SCHALL BOJEN

PROCESS AND DEVICE FOR LOCATING SOUND-PRODUCING DEVICES USING AN ANTENNA CONSISTING OF PASSIVE RADIO-SONIC BUOYS

(84) Etats contractants désignés:
**DE GB IT**

(30) Priorité: **13.03.1992 FR 9203005**

(43) Date de publication de la demande:
**28.12.1994 Bulletin 1994/52**

(73) Titulaire: **THOMSON-CSF**
**75008 Paris (FR)**

(72) Inventeur: **FORSTER, Philippe**
**Thomson-CSF SCPI**
**F-92402 Courbevoie Cédex (FR)**

(74) Mandataire: **Desperrier, Jean-Louis et al**
**THOMSON-CSF-S.C.P.I.,**
**13, Avenue du Président**
**Salvador Allende**
**94117 Arcueil Cédex (FR)**

(56) Documents cités:
- **DIXIEME COLLOQUE SUR LE TRAITEMENT DU SIGNAL ET SES APPLICATIONS 20 Mai 1985, NICE, FRANCE pages 331 - 337 P. NICOLAS ET AL. 'Localisation de sources ponctuelles avec une antenne de geometrie inconnue' cité dans la demande**
- **NEUVIEME COLLOQUE SUR LE TRAITEMENT DU SIGNAL ET SES APPLICATIONS 16 Mai 1983, NICE, FRANCE pages 265 - 270 L. KOPP ET AL. 'Detection par les valeurs propres de la matrice interspectrale: adaptation au bruit de fond' cite dans la demande**
- **IBM TECHNICAL DISCLOSURE BULLETIN vol. 32, no. 3B, Août 1989, pages 290 - 293 , XP29850 'Acoustic broadband detection with difar buoys'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 630 482 B1

Printed by Jouve, 75001 PARIS (FR)

## Description

La présente invention se rapporte à un procédé et à un dispositif permettant de localiser un ou plusieurs bruiteurs à partir des signaux recueillis par une antenne de géométrie inconnue constituée de bouées acoustiques passives.

Les bouées acoustiques passives sont utilisées, par exemple, par les aéronefs pour la détection, la localisation et la classification des véhicules sous-marins. Les méthodes de traitement du signal actuellement mises en oeuvre sur les signaux recueillis à bord de l'aéronef sont essentiellement non cohérentes : c'est-à-dire que chaque bouée fournit, après détection, des mesures de fréquence ou des mesures de fréquence et d'azimut ; la localisation des cibles s'effectue ensuite à partir de ces mesures.

Compte-tenu de la diminution des niveaux de bruits rayonnés par les véhicules sous-marins, les performances individuelles des bouées passives en détection deviennent faibles et deviendront encore plus faibles vis-à-vis des véhicules sous-marins très silencieux du futur. C'est pourquoi le développement et l'étude de méthodes de traitement d'antenne applicables à un réseau de bouées (dont les positions sont mal connues) est important.

Diverses méthodes de traitement d'une antenne d'hydrophones dont les positions sont mal connues voire inconnues ont été proposées depuis une quinzaine d'années.

Une première série de méthodes utilise des sources auxiliaires dont les positions sont connues. A titre d'exemple, de telles méthodes sont décrites dans les articles suivants :

- "A self-survey technique for self-cohering of antenna systems" par C.N. Dorny, IEEE-AES, Nov. 1978, pp. 977-991.
- "Cohering of an experimental non rigid array by self-survey" par C.N. Dorny et al ; IEEE-AES, Nov. 1980, pp. 902-904.

Une deuxième série de méthodes utilise des sources auxiliaires dont les positions sont inconnues. A titre d'exemple, de telles méthodes sont décrites dans les articles suivants :

- "Array shape calibration using sources in unknown locations - Part I", par Y. Rockah et P.M. Schultheiss, IEEE-ASSP, mars 1987, pp. 286-299
- "Array shape calibration using sources in unknown locations - Part II", par Y. Rockah et P.M. Schultheiss, IEEE-ASSP, juin 1987, pp. 724-735.

Les sources auxiliaires peuvent être, par exemple, des bouées actives, c'est-à-dire émettrices. Ces sources servent à déterminer la géométrie de l'antenne et les signaux qu'elles émettent doivent être séparés en temps ou en fréquence. Une fois réalisée la calibration de l'antenne, la localisation des bruiteurs peut être réalisée par n'importe quelle méthode de traitement d'antenne. La calibration de l'antenne peut être réalisée par triangulation.

La nécessité de sources auxiliaires dans les traitements précités est contraignante en pratique et une méthode permettant de s'en affranchir a été développée. Cette méthode s'applique uniquement dans le cas de signaux à large bande et sa mise en oeuvre nécessite la présence d'au moins trois bruiteurs. Ces bruiteurs sont des sources de bruit existantes, telles que des navires. Cette méthode est décrite dans les articles suivants :

- "Localisation de sources ponctuelles avec une antenne de géométrie inconnue" par P. Nicolas et G. Vezzosi, GRETZI 85, pp. 331-337
- "Estimation of phase angles from the cross-spectral matrix" par G. Vezzosi, IEEE-ASSP, juin 1986, pp. 405-422
- "Time delay estimation using an eigenstructure based spectral method" par G. Vezzosi et P. Nicolas, 25th Conf. on Decision and Control", pp. 949-952.

Enfin, une méthode de traitement d'antenne baptisée ESPRIT a été développée dans le cas particulier d'un réseau de géométrie inconnue constitué de deux sous-réseaux dont l'un est le translaté de l'autre, le vecteur de translation permettant de passer d'un sous-réseau à l'autre étant connu.

Cette méthode est décrite dans les documents suivants :

- "A subspace rotation approach to signal parameter estimation", par A. Paulraj, R. Roy et T. Kailath, "Proc. of the IEEE "Proc. of the IEEE", juillet 1986, pp. 1044-1045
- "ESPRIT-Estimation of signal parameters via rotational invariance techniques" par R. Roy et T. Kailath, IEEE-ASSP, juillet 1989, pp. 984-995
- et le brevet US-A-4 750 147.

Cependant la mise en oeuvre de cette méthode nécessite le recours à des servomécanismes pour effectuer des opérations d'orientation des différents éléments composant l'antenne.

L'invention vise à pallier les inconvénients de l'Art connu qui viennent d'être rappelés.

Elle permet de localiser plusieurs sources en bande étroite à l'aide d'une antenne de géométrie inconnue constituée de bouées utilisant des hydrophones directifs sans hypothèse restrictive sur le nombre minimal de bruiteurs et sur la géométrie de l'antenne. Elle ne nécessite pas non plus l'adjonction de sources auxiliaires, ni d'avoir recours à des servomécanismes pour l'orientation des éléments de l'antenne. Dans une variante préférée, les bouées sont du type connu sous l'appellation anglo-saxonne "DIFAR" ( "Directional Frequency Analysis and Recording").

Les caractéristiques principales de ce type de bouées seront rappelées ultérieurement.

Le procédé de l'invention permet une très grande précision. Dans des conditions idéales : gains des hydrophones réglés aux gains nominaux, nombre d'observations infini, bruit spatialement blanc ; ce procédé permet de déterminer les azimuts des bruiteurs avec une précision infinie.

L'invention a donc pour objet un procédé de localisation de bruiteurs par une antenne constituée de N capteurs acoustiques directifs, associés à N transducteurs de signaux sonores reçus de chaque bruiteur ; chacun desdits capteurs acoustiques étant muni de moyens générant une grandeur représentant le cap par rapport au Nord magnétique terrestre ; caractérisé en ce que, lesdits capteurs directifs étant constitués d'une paire de doublets présentant un diagramme de directivité en double huit dont les maxima sont alignés sur des premier et second axes orthogonaux entre eux, ce procédé comprend au moins les étapes suivantes :

- génération par chaque capteur d'une paire de signaux analogiques, réponses des doublets suivant lesdits premier et second axes orthogonaux
- rotation d'un angle $K_n$ de chacune des paires de signaux, avec $K_n$ cap de la bouée n et $1 \leq n \leq N$, de façon à générer une nouvelle paire de signaux $x_n(t)$ et $y_n(t)$, telle que $A_n(t)$ étant le signal associé au premier axe et $B_n(t)$ le signal associé au second axe, la relation suivante soit vérifiée :

$$\begin{bmatrix} x_n(t) \\ y_n(t) \end{bmatrix} = \begin{bmatrix} \cos(K_n) & -\sin(K_n) \\ \sin(K_n) & \cos(K_n) \end{bmatrix} \begin{bmatrix} A_n(t) \\ B_n(t) \end{bmatrix}$$

- échantillonnage à l'aide d'un signal de fréquence déterminée de ces signaux et leur conversion en signaux numériques
- génération de la matrice spectrale des signaux ainsi convertis
- décomposition de la matrice spectrale en éléments propres ($\underline{u}_1$ à $\underline{u}_{2N}$, $\lambda_1$ à $\lambda_{2N}$)
- estimation du nombre P de bruiteurs en déterminant la multiplicité de la plus petite valeur propre de la matrice spectrale
- génération d'au moins deux matrices, $\underline{U}_1$ et $\underline{U}_2$, à N lignes et P colonnes, N et P étant respectivement le nombre de bouées et le nombre de bruiteurs estimés. telles aue la relation suivant soit satisfaite :

$$\begin{bmatrix} \underline{U}_1 \\ \underline{U}_2 \end{bmatrix} = \begin{bmatrix} \underline{u}_1 & \vdots & \underline{u}_2 & \vdots & \cdots & \vdots & \underline{u}_p \end{bmatrix}$$

dans laquelle $\underline{u}_1$ à $\underline{u}_p$ sont les vecteurs propres de la matrice spectrale ($\underline{\Gamma}$)

- génération d'une troisième matrice $\underline{U}$, également à N lignes et P colonnes, telle que les colonnes forment une base orthonormée commune aux espaces vectoriels engendrés par les colonnes des matrices $\underline{U}_1$ et $\underline{U}_2$
- et la localisation desdits P bruiteurs en utilisant au moins les matrices $\underline{U}$, $\underline{U}_1$ et $\underline{U}_3$ ; ladite localisation consistant à générer une suite de valeurs ($\theta_1$ à $\theta_p$) représentant les azimuts estimés des bruiteurs, modulo 180°.

L'invention a encore pour objet un dispositif pour la mise en oeuvre de ce procédé.

L'invention sera mieux comprise et d'autres caractéristiques et avantages apparaîtront à l'aide de la description qui suit en référence aux figures annexées et parmi lesquelles :

- la figure 1 est un diagramme illustrant le fonctionnement d'une bouée de type "DIFAR" ;
- la figure 2 illustre schématiquement un dispositif selon l'invention ;
- les figures 3 et 4 sont des diagrammes illustrant deux variantes de réalisation de l'invention.

On va maintenant décrire le procédé de l'invention à l'aide d'un exemple de réalisation d'un dispositif mettant en oeuvre ce procédé.

Dans une variante préférée du procédé de l'invention, on utilise une antenne constituée d'éléments passifs à base de bouées connues sous la dénomination "DIFAR" ou "Direction Frequency Analysis and Recording".

Le type d'antenne est connu et il est inutile de le décrire de façon détaillée. On pourra se reporter avec profit aux brevets US-A-4 205 396, US-A-3 603 921 ou US-A-3 444 508, à titre d'exemples non limitatifs.

Il est cependant utile de rappeler brièvement les principales caractéristiques d'une telle antenne.

Une antenne de ce type fait appel à des hydrophones directifs. Chaque bouée constituant l'antenne comprend au moins deux doublets d'hydrophones. Les doublets utilisés présentent un diagramme de direction en forme de huit dit en "cosinus". Les deux doublets sont orientés de telle façon que les diagrammes de directivités soient orthogonaux.

La figure 1 illustre des diagrammes de directivité d'une bouée de type DIFAR. Naturellement les orientations "NORD-SUD" et "EST-OUEST" sont purement arbitraires et doivent être entendues par rapport aux maxima définis par le diagramme de directivité. On a repéré sur la figure X-X' les deux lobes du diagramme de directivité du premier doublet et Y-Y' les lobes du diagramme de directivité du second doublet. On a représenté une source de bruit sous la référence S. On suppose que cette source S est située à une distance importante de la bouée. On parle de champ lointain. On suppose que les ondes sonores sont reçues sous l'incidence θ par rapport à l'axe "OUEST-EST" de la bouée.

Le signal fourni en sortie du premier doublet d'hydrophones obéit à la relation (diagramme X-X') :

$$S_x = A \cos \theta \qquad (1)$$

De même, le signal fourni en sortie du second doublet d'hydrophones obéit à la relation (diagramme Y-Y') :

$$S_y = A \sin \theta \qquad (2)$$

Dans ces relations, A est une valeur indicative du niveau d'intensité sonore à l'endroit de la bouée réceptrice. Cette valeur A est identique dans les deux équations, car les hydrophones sont supposés avoir la même sensibilité.

Dans une variante préférée de l'invention, on utilise N bouées du type qui vient d'être décrit ; l'ensemble de ces N bouées forment une antenne de géométrie inconnue. Ces bouées ont pu être larguées, par exemple, d'un aéronef.

Les bouées sont caractérisées par le fait qu'elles fournissent, en présence de P bruiteurs en champ lointain, des signaux de la forme :

$$\begin{bmatrix} a(t) \\ b(t) \end{bmatrix} = \sum_{i=1}^{P} s_i(t) \begin{bmatrix} \cos \varphi i \\ \sin \varphi i \end{bmatrix} + \begin{bmatrix} n(t) \\ m(t) \end{bmatrix} \qquad (3)$$

relation dans laquelle a(t) et b() sont les signaux présents sur les sorties respectives des doublets dits "Nord-Sud" et "Est-Ouest" d'une bouée donnée, n(t) et m(t) le bruit de fond en sorties de ces mêmes doublets et $\varphi_1$ à $\varphi_P$ les gisements des P bruiteurs par rapport au nord de la bouée, le paramètre t représente naturellement le temps. La bouée comporte par ailleurs un compas qui fournit son cap par rapport au nord magnétique.

Cette équation (3) n'est en réalité que la généralisation à P sources, et en tenant compte du bruit de fond, des équations (1) et (2).

La figure 2 illustre schématiquement un dispositif selon l'invention. Comme il a été rappelé, l'antenne est composée de N bouées que l'on numérote 1 à N ; une bouée quelconque de cet ensemble est numérotée n, par convention. Pour simplifier, dans ce qui suit, on utilisera les références "N-S" pour "Nord-Sud" et "E-O" pour "Est-Ouest".

Pour chaque bouée n, les signaux $a_n(t)$ et $b_n(t)$ issus des doublets "N-S" et "E-O" sont traités de manière classique par un circuit 1.n d'amplification et de filtrage. Sur la figure 2, ces dispositifs sont représentés par les blocs 1.1 à 1.N.

Pour être utilisables ces signaux doivent être "alignés" par rapport à un même axe de référence. On choisit le Nord magnétique.

Pour ce faire,chaque bouée est munie d'un compas, comme il a été indiqué.

Les sorties $A_n(t)$ et $B_n(t)$ d'un circuit quelconque son alimentent un circuit 2.n qui lui correspond. Celui-ci leur fait subir une rotation d'angle $K_n$, où $K_n$ désigne le cap de la n-ième bouée par rapport au Nord magnétique, de façon à fournir les signaux $x_n(t)$ et $y_n(t)$ définis par la relation :

$$\begin{bmatrix} x_n(t) \\ y_n(t) \end{bmatrix} = \begin{bmatrix} \cos(K_n) & -\sin(K_n) \\ \sin(K_n) & \cos(K_n) \end{bmatrix} \begin{bmatrix} A_n(t) \\ B_n(t) \end{bmatrix} \quad (4)$$

Comme il a été indiqué, le cap $K_n$ est fourni par un campas associé à chaque bouée.

On constate que le dispositif de l'invention permet l'"alignement" nécessaire des bouées de façon très simple par une "rotation électrique".

Les signaux issus des circuits 2.1 à 2.N sont ensuite échantillonnés à une cadence d'échantillonnage $T_e$ liée à la fréquence de coupure haute des circuits de filtrage 1-1 ..., 1-N et numérisés par un convertisseur analogique-numérique 3.

Les échantillons vectoriels sont donnés par la relation :

$$\underline{X}(n) = [x_1\ (nTe), ..., x_N(nT_e), y_1\ (nT_e) ..., y_N(nT_e)]^T \quad (5)$$

dans laquelle les valeurs $x_1\ (nT_e)$ à $x_N(nT_e)$ sont les signaux dits "N-S" et les valeurs $y_1(nT_e)$, les signaux dites "E-O". On dispose donc de 2N signaux : deux par bouée.

Ces signaux, présents en sortie du convertisseur analogique-numérique 3, sont traités par un circuit 4 qui estime leur matrice spectrale à la fréquence d'analyse par une méthode d'estimation spectrale consistant par exemple en une pondération temporelle des données suivi d'un moyennage temporel de périodogrammes (ou d'un lissage fréquentiel) ; le nombre de périodogrammes moyennés (ou lissés) devant être supérieur ou égal au nombre de bouées. La résolution fréquentielle minimale de l'analyse spectrale doit satisfaire l'inégalité :

$$\Delta f << c/d, \quad (6)$$

relation dans laquelle c désigne la célérité du son et d la distance maximale entre deux bouées, un facteur dix étant en général suffisant entre les deux membres de cette inégalité. Il doit être bien entendu que la connaissance de d n'implique pas la connaissance de la géométrie de l'antenne. Un ordre de grandeur ou une estimation de cette distance, par exemple après largage des bouées, est suffisante. Le temps total d'une analyse spectrale ne doit pas excéder le temps de stationnarité présumé des signaux.

La matrice spectrale $\underline{\Gamma}$ estimée par le circuit 4 est décomposée en éléments propres par un circuit 5 qui en calcule les valeurs propres

$\{\lambda_1 \geq \lambda_2 \geq ... \geq \lambda_{2N}\}$ et les vecteurs propres $\{\underline{u}_1, \cdots, \underline{u}_{2N}\}$ associés, en utilisant une méthode de diagonalisation matricielle.

A ce stade, on peut estimer le nombre P de bruiteurs. Ceci peut être réalisé en testant la multiplicité de la plus petite valeur propre de la matrice spectrale. On a recours, par exemple, au test de sphéricité : comparaison par rapport à un seuil du rapport des moyennes géométriques et arithmétiques des plus petites valeurs propres. Le circuit 6 forme ensuite deux matrices, $\underline{U}_1$ et $\underline{U}_2$, chacune ayant N lignes et P colonnes. Ces matrices sont telles que la relation suivante soit satisfaite :

$$\begin{bmatrix} \underline{U}_1 \\ \underline{U}_2 \end{bmatrix} = \begin{bmatrix} \underline{u}_1 \vdots \underline{u}_2 \vdots \dots \vdots \underline{u}_p \end{bmatrix} \begin{matrix} \}\ \text{N lignes} \\ \}\ \text{N lignes} \end{matrix} \quad (7)$$

Le circuit 6 génère aussi la matrice diagonale $\underline{\Lambda}$ définie par la relation :

$$\underline{\Lambda} = \text{diag}\ \{\lambda_1 - \sigma, ..., \lambda_p - \sigma\} \quad (8)$$

dans laquelle

$$\sigma = (\lambda_{p+1} + ... + \lambda_N)/(N-P)$$

Cette opération a pour but d'extraire le "bruit de fond" des signaux sources.

Les traitements réalisés par les circuits 4 à 6, peuvent être conformes à ceux décrits dans l'article de Laurent KOPP et Georges BIENVENU : "Détection par les valeurs propres de la matrice interspectrale : Adaptation au bruit de fond" paru dans "'Neuvième colloque sur le Traitement du Signal et ses Applications", 16-20 mai 1983, pages 265-270. Un des enseignements de cet article est que, si l'on considère les amplitudes des valeurs propres, les plus faibles correspondent au bruit de fond et les plus importantes aux sources. Ce processus est schématisé par la figure 3. Dans l'exemple illustré sur cette figure, six valeurs propres correspondent à des sources repérées arbitrairement $S_1$ à $S_6$, les autres étant considérées correspondre à du bruit de fond.

Un circuit 7 calcule ensuite une matrice $\underline{U}_{NxP}$ dont les colonnes forment une base orthonormée commune aux espaces vectoriels engendrés par les colonnes des matrices $\underline{U}_1$ et $\underline{U}_2$. Naturellement, il s'agit d'une approximation car il faut tenir compte des erreurs dues aux mesures.

Une solution est de choisir pour $\underline{U}$ la matrice formée par les P vecteurs singuliers gauches associés aux P plus grandes valeurs singulières de la matrice Nx2P[$\underline{U}_1$ : $\underline{U}_2$].

Cette méthode est conforme à celle enseignée dans le brevet US-A-4 750 147 précité. Il doit cependant être bien entendu que l'invention ne nécessite pas le recours à deux sous-réseaux reliés par un vecteur de translation connu.

A la suite de ces opérations, les sources sonores ou bruiteurs peuvent être localisées.

Selon l'invention, la localisation proprement dite peut s'effectuer selon deux variantes de réalisation.

Ces deux variantes sont schématisées sur la figure 2, respectivement, par les circuits 8 et 9. Ces deux circuits utilisent, d'une part, les matrices $\underline{U}_1$ et $\underline{U}_2$ et, d'autre part, la matrice $\underline{U}$ qui vient d'être calculée. En outre, le circuit 9, et seulement ce circuit, reçoit la matrice $\underline{\Lambda}$.

La première variante tire partie du fait que, si $\theta_p$ représente l'azimut d'une source p (avec $1 \leq p \leq P$), la matrice $\underline{U}_1$ correspond aux signaux en cos $\theta_p$ et la matrice $\underline{U}_2$ aux signaux en sin $\theta_p$. Pour obtenir les signaux avec une phase $\theta_p$, il faut effectuer une multiplication matricielle telle que l'on obtienne une forme en exp ($i\theta_p$) soit :

$$\begin{bmatrix} 1 & i \\ 1 & -i \end{bmatrix} \begin{bmatrix} \cos\theta_p \\ \sin\theta_p \end{bmatrix} = \begin{bmatrix} e^{i\theta_p} \\ e^{-i\theta_p} \end{bmatrix} \quad (8)$$

Ce type d'opération est effectué par le circuit 8.

De façon plus précise, le circuit 8 calcule les P valeurs propres, notées $\alpha_1$ à $\alpha_p$, de la matrice définie par :

$$\left[(\underline{U}_1 + i\underline{U}_2)^* \underline{U}\right]^{-1} \times \left[(\underline{U}_1 - i\underline{U}_2)^* \underline{U}\right] \quad (9)$$

relation dans laquelle l'astétix indique qu'il s'agit de la matrice conjuguée.

Une fois cette opération réalisée, le circuit 8 peut fournir en sortie les P azimuts estimés des bruiteurs, soit $\theta_1$ à $\theta_p$ ; ce naturellement avec une ambigüité de 180° comme il est bien connu.

Des méthodes pour lever cette ambigüité sont également bien connues de l'homme de métier et il est inutile de les décrire.

Pour une source sonore ou bruiteur quelconque p, l'azimut estimé est donné par la relation :

$$\theta_p = \frac{1}{2} \operatorname{Arg}(\alpha_p) \quad (10)$$

Selon la seconde variante de réalisation, on fait "tourner" l'angle θ entre deux valeurs prédéterminées normalement entre -90° et +90°. On "observe" la disparition d'une source, c'est-à-dire quand elle passe devant le zéro de directivité du dipôle.

Cependant, ce processus nécessite que le bruit soit extrait des signaux utiles. Pour ce faire, on utilise la matrice $\underline{\Lambda}$. Le circuit 9 effectue ces opérations.

De façon plus précise, le circuit 9 calcule à partir des matrices $\underline{U}$, $\underline{U}_1$, $\underline{U}_2$ et $\underline{\Lambda}$, pour θ variant de -90° à 90° avec un pas suffisamment petit (1° par exemple), la fonction f(θ) définie comme l'inverse de la plus petite valeur propre de la matrice répondant à la relation :

$$\underline{U}^* (\sin\theta\, \underline{U}_1 - \cos\theta\, \underline{U}_2)\, \underline{\Lambda}\, (\sin\theta\, \underline{U}_1 - \cos\theta\, \underline{U}_2)^* \underline{U} \quad (11)$$

Dans ces conditions, les azimuts estimés des bruiteurs sont fournis par les abscisses des maxima de la fonction f(θ).

La figure 4 illustre ce processus. Sur cette figure, on a représenté la variation de la courbe f(θ) en fonction de θ variant de + 90° à -90°. La courbe f(θ), dans l'exemple considéré, présente huit pics, correspondant à huit bruiteurs repérés de façon arbitraire $S_1$ à $S_8$. Les huit valeurs de θ, $\theta_1$ à $\theta_8$, correspondent aux azimuts des huit bruiteurs. Les signaux $\theta_1$ à $\theta_n$ sont disponibles en sortie du circuit 9.

A titre d'exemple, on pourra utiliser une dizaine de bouées de type "DIFAR" pour constituer l'antenne, de préférence un nombre puissance de deux, soit huit ou seize. Ce dernier choix rend plus aisé les calculs numériques.

Il doit être bien entendu que la présence simultanée des circuits 8 et 9 n'est nullement requise. Il s'agit de deux variantes de réalisation de l'invention.

Le dispositif de l'invention peut comprendre l'un ou l'autre de ces circuits ou, comme représenté sur la figure 2, les deux circuits. Si l'on ne fait appel qu'au circuit 8 conforme à ce qui a été appelé "première variante" de réalisation de l'invention, il n'est pas utile de générer la matrice $\underline{\Lambda}$ qui n'est utilisée que par le circuit 9 ("seconde variante").

L'invention n'est pas limitée à l'utilisation d'antennes de type "DIFAR". On peut également mettre en oeuvre des antennes filaires comportant des paires d'hydrophones directifs. A titre d'exemple non limitatif, une telle antenne est décrite dans la demande de brevet français publiée le 15 mars 1991 sous le N° 2 651 950. Cette demande de brevet est relative en outre à des dispositions permettant la levée d'ambigüité "Droite-Gauche" associée à l'antenne, ce qui a été appelé "ambigüité de 180°" dans la présente description. Dans cette variante, non représentée, l'antenne ne comprend plus N bouées distinctes. Celles-ci sont remplacées par les N paires de doublets composant l'antenne linéaire. Il faut naturellement, conformément à l'invention, disposer de moyens fournissant la valeur du cap, ce pour chaque doublet.

**Revendications**

1. Procédé de localisation de bruiteurs par une antenne constituée de N capteurs acoustiques directifs, associés à N transducteurs de signaux sonores reçus de chaque bruiteur; chacun desdits capteurs acoustiques étant muni de moyens générant une grandeur représentant le cap ($K_n$) par rapport au Nord magnétique terrestre ; caractérisé en ce que, lesdits capteurs directifs étant constitués d'une paire de doublets présentant un diagramme de directivité en double huit (X-X', Y-Y') dont les maxima sont alignés sur des premier et second axes (EST-OUEST", "NORD-OUEST") orthogonaux entre eux, ce procédé comprend au moins les étapes suivantes :

   - génération par chaque capteur d'une paire de signaux analogiques ($a_n$, $b_n$), réponses des doublets suivant lesdits premier et second axes orthogonaux
   - rotation d'un angle $K_n$ de chacune des paires de signaux, avec $K_n$ cap de la bouée n et $1 \leq n \leq N$, de façon à générer une nouvelle paire de signaux $x_n(t)$ et $y_n(t)$, telle que $A_n(t)$ étant le signal associé au premier axe et $B_n(t)$ le signal associé au second axe, la relation suivante soit vérifiée :

$$\begin{bmatrix} x_n(t) \\ y_n(t) \end{bmatrix} = \begin{bmatrix} \cos(K_n) & -\sin(K_n) \\ \sin(K_n) & \cos(K_n) \end{bmatrix} \begin{bmatrix} A_n(t) \\ B_n(t) \end{bmatrix}$$

   - échantillonnage à l'aide d'un signal de fréquence déterminée ($T_e$) de ces signaux et leur conversion en signaux numériques ($\underline{X}(n)$)
   - génération de la matrice spectrale ($\underline{\Gamma}$) des signaux ainsi convertis
   - décomposition de la matrice spectrale ($\underline{\Gamma}$) en éléments propres ($\underline{u}_1$ à $\underline{u}_{2N}$, $\lambda_1$ à $\lambda_{2N}$)
   - estimation du nombre P de bruiteurs en déterminant la multiplicité de la plus petite valeur propre de la matrice spectrale
   - génération d'au moins deux matrices, $\underline{U}_1$ et $\underline{U}_2$, à N lignes et P colonnes, N et P étant respectivement le nombre de bouées et le nombre de bruiteurs estimés, telles que la relation suivant soit satisfaite :

$$\begin{bmatrix} \underline{U}_1 \\ \underline{U}_2 \end{bmatrix} = \begin{bmatrix} \underline{u}_1 & \vdots & \underline{u}_2 & \vdots & \cdots & \vdots & \underline{u}_p \end{bmatrix}$$

dans laquelle $\underline{u}_1$ à $\underline{u}_p$ sont les vecteurs propres de la matrice spectrale ($\underline{\Gamma}$)

- génération d'une troisième matrice $\underline{U}$, également à N lignes et P colonnes, telle que les colonnes forment une base orthonormée commune aux espaces vectoriels engendrés par les colonnes des matrices $\underline{U}_1$ et $\underline{U}_2$
- et la localisation desdits P bruiteurs en utilisant au moins les matrices $\underline{U}$, $\underline{U}_1$ et $\underline{U}_3$ ; ladite localisation consistant à générer une suite de valeurs ($\theta_1$ à $\theta_p$) représentant les azimuts estimés des bruiteurs, modulo 180°.

**2.** Procédé selon la revendication 1, caractérisé en ce que l'étape de localisation desdits P bruiteurs comprend les phases suivantes :

- une première phase de génération des P valeurs propres de la matrice définie par la relation :

$$\left[(\underline{U}_1 + i\underline{U}_2)^* \underline{U}\right]^{-1} \times \left[(\underline{U}_1 - i\,\underline{U}_2)^* \underline{U}\right]$$

relation dans laquelle $(\underline{U}_1 + i\underline{U}_2)^*$ est la matrice conjuguée de $(\underline{U}_1 + i\underline{U}_2)$

- et une seconde phase de génération desdits azimuts, l'azimut $\theta_p$ d'un bruiteur p, avec 1 < p < P, étant tel que :

$$\theta_p = \frac{1}{2}\,\mathrm{Arg}\,(\alpha_p)$$

$\alpha_p$ étant la valeur propre de rang p de la matrice générée à la première phase.

**3.** Procédé selon la revendication 1, caractérisé en ce qu'il comprend une étape supplémentaire de génération d'une matrice diagonale $\underline{\Lambda}$ répondant à la relation suivante :

$\underline{\Lambda} = \mathrm{diag}\,[\lambda_1 - \sigma, ..., \lambda_P - \sigma\}$ dans laquelle $\lambda_1$ à $\lambda_p$ sont les vecteurs propres de rangs 1 à P de ladite matrice spectrale ($\underline{\Gamma}$) et $\sigma$ donné par la relation $\sigma = (\lambda_{P+1} + ... + \lambda_N) / (N - P)$ et en ce que la localisation desdits P bruiteurs comprend les phases suivantes :

- génération de la fonction $f(\theta)$ telle que $f(\theta)$ soit l'inverse de la plus petite valeur propre de la matrice :

$$\left[\underline{U}^* \,(\sin\theta\;\underline{U}_1 - \cos\theta\;\underline{U}_2)\;\underline{\Lambda}\;(\sin\theta\;\underline{U}_1 - \cos\theta\;\underline{U}_2)^*\;\underline{U}\right]$$

- et détermination des maxima de cette fonction dans une gamme déterminée de l'angle $\theta$, les valeurs $\theta_p$ de ces maxima représentant les azimut desdits P bruiteurs ($\theta_1$ à $\theta_P$), modulo 180°.

**4.** Procédé selon la revendication 2, caractérisé en ce que ladite gamme déterminée comprend les angles $\theta$ variant de -90° à + 90°.

**5.** Procédé selon la revendication 1, caractérisé en ce que ladite troisième matrice $\underline{U}$ est formée par les P vecteurs singuliers gauches associés aux P plus grandes valeurs de la matrice $[\underline{U}_1 : \underline{U}_2]$, matrice comportant N lignes et 2P colonnes et $\underline{U}_1$, $\underline{U}_2$ étant lesdites première et deuxième matrices.

**6.** Dispositif de mise en oeuvre du procédé de localisation de bruiteurs selon l'une quelconque des revendications 1 à 5, caractérisé en ce qu'il comprend des premiers moyens (1.1 à 1.N), en nombre égal audit nombre N pour amplifier et filtrer les paires de signaux analogiques ($a_n$, $b_n$), des deuxièmes moyens (2.1 à 2.N) pour faire tourner chacune des paires de signaux ainsi amplifiés et filtrés d'un angle représentant le cap magnétique ($K_n$) associé au capteur directif générant ladite paire de signaux analogiques, des troisièmes moyens (3) convertissant les paires de signaux en échantillons numériques vectoriels, des quatrièmes moyens (4) générant ladite matrice spec-

trale ($\underline{\Gamma}$) de ces échantillons, des cinquièmes moyens (5) décomposant cette matrice spectrale ($\underline{\Gamma}$) en éléments propres ($\underline{u}_1$ à $\underline{u}_{2N}$, $\lambda_1$ à $\lambda_{2N}$), des sixièmes moyens (6) estimant à partir de ces éléments propres le nombre P de bruiteurs et générant au moins une première et une deuxième matrice $\underline{U}_1$ et $\underline{U}_2$, obéissant à la relation :

$$\begin{bmatrix} \underline{U}_1 \\ \underline{U}_2 \end{bmatrix} = \left[ \underline{u}_1 \vdots \underline{u}_2 \vdots \cdots \vdots \underline{u}_P \right]$$

dans laquelle $\underline{u}_1$ à $\underline{u}_P$ sont les vecteurs propres de ladite matrice spectrale ($\underline{\Gamma}$) ; des septièmes moyens (7) générant à partir desdites première et deuxième matrice une troisième matrice $\underline{U}$ telle que ses colonnes forment une base orthonormée commune aux espaces vectoriels engendrés par les colonnes des matrices $\underline{U}_1$ et $\underline{U}_2$ ; et des huitièmes moyens (8 ou 9) effectuant la localisation des P bruiteurs à partir d'au moins lesdites première, deuxième et troisième matrice ($\underline{U}_1$, $\underline{U}_2$, U).

**7.** Dispositif selon la revendication 6, caractérisé en ce que les huitièmes moyens (8) effectuant la localisation de P bruiteurs génèrent P valeurs propres $\alpha_1$ à $\alpha_P$ de la matrice

$$\left[ (\underline{U}_1 + i\,\underline{U}_2)^* \underline{U} \right]^{-1} \cdot \left[ (\underline{U}_1 - i\,\underline{U}_2)^* \underline{U} \right]$$

et estiment les azimuts $\theta_1$ à $\theta_P$ des P bruiteurs en effectuant les calculs successifs $\theta_p = \frac{1}{2}\,\mathrm{Arg}(\alpha_p)$, avec $1 \le p \le P$.

**8.** Dispositif selon la revendication 6, caractérisé en ce que les sixièmes moyens (6) génèrent en outre une matrice diagonale $\underline{\Lambda}$ telle que

$$\underline{\Lambda} = \mathrm{diag}\,\{\lambda_1 - \sigma, \lambda_2 - \sigma, ...., \lambda_P - \sigma\}$$

avec $\lambda_1$ et $\lambda_P$ valeurs propres de la matrice spectrale ($\underline{\Gamma}$) de rang 1 à P ; et $\sigma = (\lambda_{P+1} + ... + \lambda_N)/(N-P)$, avec $\lambda_{P+1}$ à $\lambda_N$ valeurs propres de la matrice spectrale ($\Gamma$) de rang(P+1) à N ; et en ce qu'il détermine les maxima de la fonction $f(\theta)$ inverse de la plus petite valeur propre de la matrice :

$$\left[ \underline{U}^* \,(\sin\theta\ \underline{U}_1 - \cos\theta\ \underline{U}_2)\ \underline{\Lambda}\ (\sin\theta\ \underline{U}_1 - \cos\theta\ \underline{U}_2)^*\ \underline{U} \right]$$

les valeurs de $\theta_p$ associées aux maxima de ladite fonction $f(\theta)$ correspondant aux azimuts des P bruiteurs.

**9.** Dispositif selon l'une quelconque des revendications 6 à 8, caractérisé en ce que chaque capteur acoustique directif est constitué par une paire de doublets d'hydrophones, chaque capteur possédant deux axes de directivités orthogonaux ("Est-Ouest", "Nord-Sud"), de manière à définir un diagramme de directivité en double huit ; et en ce que ces capteurs sont disposés, chacun, dans une bouée munie de moyens générant un signal ($K_n$) représentant le cap par rapport au Nord magnétique.

**10.** Dispositif selon l'une quelconque des revendications 6 à 8, caractérisé en ce que chaque capteur acoustique directif est constitué par une paire de doublets d'hydrophones, chaque capteur possédant deux axes de directivités orthogonaux ("Est-Ouest", "Nord-Sud"), de manière à définir un diagramme de directivité en double huit ; et en ce que ces capteurs forment une antenne filaire de longueur déterminée comprenant des moyens générant des signaux représentant les caps par rapport au Nord magnétique associés à chacun de ces capteurs.

## Patentansprüche

**1.** Verfahren zur Lokalisierung von Geräuschquellen durch eine Antenne, die aus N akustischen Richtaufnehmern gebildet ist, die N Wandlern für die empfangenen Schallsignale jeder Geräuschquelle zugeordnet sind, wobei jeder

der akustischen Aufnehmer mit Mitteln ausgestattet ist, die eine Größe erzeugen, welche den Kurs ($K_n$) in bezug auf die erdmagnetische Nordrichtung darstellt, dadurch gekennzeichnet, daß, wenn die Richtaufnehmer aus einem Paar Dubletten gebildet sind, das ein Doppelacht-Richtdiagramm (X-X', Y-Y') aufweist, dessen Maxima entlang zueinander senkrechten ersten und zweiten Achsen ("OST-WEST", "NORD-SÜD") ausgerichtet sind, das Verfahren die folgenden Schritte enthält:

- Erzeugung eines Paares von Analogsignalen ($a_n$, $b_n$), welche dem Ansprechen der Dubletten entlang der ersten bzw. der zweiten der zueinander senkrechten Achsen entsprechen;
- Drehung jedes der Signalpaare um einen Winkel $K_n$, wobei $K_n$ der Kurs der Boje ist und $1 \leq n \leq N$ gilt, so daß ein neues Signalpaar $x_n(t)$ und $y_n(t)$ derart erzeugt wird, daß dann, wenn $A_n(t)$ das der ersten Achse zugeordnete Signal und $B_n(t)$ das der zweiten Achse zugeordnete Signal ist, die folgende Beziehung erfüllt ist:

$$\begin{bmatrix} x_n(t) \\ y_n(t) \end{bmatrix} = \begin{bmatrix} \cos(K_n) & -\sin(K_n) \\ \sin(K_n) & \cos(K_n) \end{bmatrix} \begin{bmatrix} A_n(t) \\ B_n(t) \end{bmatrix}$$

- Abtastung dieser Signale mit Hilfe eines Signals bestimmter Frequenz ($T_e$) und ihre Konversion in digitale Signale ($\underline{X}(n)$);
- Erzeugen der spektralen Matrix ($\underline{\Gamma}$) der so konvertierten Signale;
- Zerlegung der spektralen Matrix ($\underline{\Gamma}$) in Eigenelemente ($\underline{u}_1$ bis $\underline{u}_{2N}$, $\lambda_1$ bis $\lambda_{2N}$);
- Schätzung der Anzahl P der Geräuschquellen durch Ermittlung der Vielfalt des kleinsten Eigenwerts der spektralen Matrix;
- Erzeugung von wenigstens zwei Matrizen $\underline{U}_1$ und $\underline{U}_2$, mit N Zeilen und P Spalten, wobei N und P die Anzahl Bojen bzw. die geschätzte Anzahl Geräuschquellen ist, in der Weise, daß die folgende Beziehung erfüllt ist:

$$\begin{bmatrix} \underline{U}_1 \\ \underline{U}_2 \end{bmatrix} = [\underline{u}_1 \; \vdots \; \underline{u}_2 \; \vdots \cdots \vdots \; \underline{u}_P]$$

  in der $\underline{u}_1$ bis $\underline{u}_p$ die Eigenvektoren der spektralen Matrix ($\underline{\Gamma}$) sind;
- Erzeugung einer dritten Matrix $\underline{U}$ mit gleichfalls N Zeilen und P Spalten in der Weise, daß die Spalten eine orthonormierte Basis bilden, die den von den Spalten der Matrizen $\underline{U}_1$ und $\underline{U}_2$ erzeugten vektoriellen Räumen gemeinsam ist;
- und die Lokalisierung der P Geräuschquellen unter Verwendung wenigstens der Matrizen $\underline{U}$, $\underline{U}_1$ und $\underline{U}_3$, wobei die Lokalisierung darin besteht, eine Folge von Werten ($\theta_1$ bis $\theta_p$) zu erzeugen, welche die geschätzen Azimutwerte der Geräuschquellen Modulo 180° darstellen.

**2.** Verfahren nach Anspruch 1, dadurch gekennzeichnet, daß der Schritt der Lokalisierung der P Geräuschquellen die folgenden Phasen enthält:

- eine erste Phase der Erzeugung der P Eigenwerte der Matrix, die durch die folgende Beziehung definiert ist:

$$\left[(\underline{U}_1 + i\underline{U}_2)^* \underline{U}\right]^{-1} \times \left[(\underline{U}_1 - i\underline{U}_2)^* \underline{U}\right]$$

  wobei in dieser Beziehung $(\underline{U}_1 + i\underline{U}_2)^*$ die zu $(\underline{U}_1 + i\underline{U}_2)$ konjugierte Matrix ist;
- und eine zweite Phase der Erzeugung der Azimutwerte, wobei für den Azimutwert $\theta_p$ einer Geräuschquelle p, mit $1 < p < P$ gilt:

$$\theta_p = \frac{1}{2} \operatorname{Arg}(\alpha_p)$$

  wobei $\alpha_p$ der Eigenwert der Ordnungszahl p der in der ersten Phase erzeugten Matrix ist.

**3.** Verfahren nach Anspruch 1, dadurch gekennzeichnet, daß es einen zusätzlichen Schritt der Erzeugung einer

diagonalen Matrix $\underline{\Lambda}$ enthält, die der folgenden Beziehung genügt:

$$\underline{\Lambda} = \mathrm{diag}\,\{\lambda_1 - \sigma, ..., \lambda_P - \sigma\}$$

in welcher $\lambda_1$ bis $\lambda_p$ die Eigenvektoren der Ordnungszahlen 1 bis P der spektralen Matrix ($\underline{\Gamma}$) sind und $\sigma$ durch die Beziehung

$$\sigma = (\lambda_{P+1} + ... + \lambda_N)/(N - P)$$

gegeben ist, und daß die Lokalisierung der P Geräuschquellen die folgenden Phasen enthält:

- Erzeugung der Funktion f(θ) in der Weise, daß f(θ) der Kehrwert des kleinsten Eigenwerts der folgenden Matrix ist:

$$\left[\underline{U}^* (\sin\theta\ \underline{U}_1 - \cos\theta\ \underline{U}_2)\ \underline{\Lambda}\ (\sin\theta\ \underline{U}_1 - \cos\theta\ \underline{U}_2)^*\ \underline{U}\right]$$

- und Bestimmung der Maxima dieser Funktion in einem bestimmten Bereich des Winkels θ, wobei die Werte $\theta_p$ dieser Maxima die Azimutwerte der P Geräuschquellen ($\theta_1$ bis $\theta_p$) Modulo 180° darstellen.

4. Verfahren nach Anspruch 2, dadurch gekennzeichnet, daß der Bereich die von -90° bis +90° veränderlichen Winkel θ enthält.

5. Verfahren nach Anspruch 1, dadurch gekennzeichnet, daß die dritte Matrix $\underline{U}$ durch die P schrägen singulären Vektoren gebildet ist, die den P größten Werten der Matrix $[\underline{U}_1 \vdots \underline{U}_2]$ zugeordnet sind, wobei die Matrix N Zeilen und 2P Spalten enthält und $\underline{U}_1$, $\underline{U}_2$ die erste bzw. die zweite Matrix sind.

6. Anordnung zur Durchführung des Verfahrens zur Lokalisierung von Geräuschquellen nach einem der Ansprüche 1 bis 5, dadurch gekennzeichnet, daß sie erste Mittel (1.1 bis 1.N), deren Anzahl gleich der Zahl N ist, zur Verstärkung und Filterung der Analogsignalpaare ($a_n$, $b_n$) enthält, zweite Mittel (2.1 bis 2.N), um jedes der so verstärkten und gefilterten Signalpaare um einen Winkel zu drehen, der den magnetischen Kurs ($K_n$) darstellt, der dem Richtungsaufnehmer zugeordnet ist, der das Analogsignalpaar geliefert hat, dritte Mittel (3), die die Analogsignalpaare in vektorielle digitale Abtastwerte umwandeln, vierte Mittel (4), welche die spektrale Matrix ($\underline{\Gamma}$) dieser Abtastwerte erzeugen, fünfte Mittel (5), die diese spektrale Matrix ($\underline{\Gamma}$) in Eigenwerte ($\underline{u}_1$ bis $\underline{u}_{2N}$, $\lambda_1$ bis $\lambda_{2N}$) zerlegen, sechste Mittel (6), die ausgehend von diesen Eigenelementen die Anzahl P von Geräuschquellen schätzen und wenigstens eine erste und eine zweite Matrix $\underline{U}_1$ bzw. $\underline{U}_2$ erzeugen, die der folgenden Beziehung genügen:

$$\begin{bmatrix}\underline{U}_1\\ \underline{U}_2\end{bmatrix} = [\underline{u}_1 \ \vdots\ \underline{u}_2 \ \vdots \cdots \vdots\ \underline{u}_P]$$

in der $\underline{u}_1$ und $\underline{u}_P$ die Eigenvektoren der spektralen Matrix ($\underline{\Gamma}$) sind, siebte Mittel (7), die aufgrund der ersten und der zweiten Matrix eine dritte Matrix $\underline{U}$ von solcher Art erzeugen, daß ihre Spalten eine orthonormierte Basis bilden, die den von den Spalten der Matrizen $\underline{U}_1$ und $\underline{U}_2$ erzeugten vektoriellen Räumen gemeinsam sind, und achte Mittel (8 oder 9) welche die Lokalisierung der P Geräuschquellen ausgehend von wenigstens der ersten, der zweiten und der dritten Matrix ($\underline{U}_1$, $\underline{U}_2$, U) bewirken.

7. Anordnung nach Anspruch 6, dadurch gekennzeichnet, daß die achten Mittel (8), welche die Lokalisierung der P Geräuschquellen bewirken, die P Eigenwerte $\alpha_1$ bis $\alpha_p$ der Matrix

$$\left[(\underline{U}_1 + i\underline{U}_2)^*\underline{U}\right]^{-1} \cdot \left[(\underline{U}_1 - i\underline{U}_2)^*\underline{U}\right]$$

erzeugen und die Azimutwerte $\theta_1$ bis $\theta_P$ der P Geräuschquellen schätzen, indem sie die aufeinanderfolgenden

Berechnungen

$$\theta_p = \frac{1}{2} \text{Arg}\,(\alpha_p)$$

mit $1 \leq p \leq P$ durchführen.

**8.** Anordnung nach Anspruch 6, dadurch gekennzeichnet, daß die sechsten Mittel (6) außerdem eine diagonale Matrix $\underline{\Lambda}$ erzeugen, für die gilt

$$\underline{\Lambda} = \text{diag}\,\{\lambda_1 - \sigma, \lambda_2 - \sigma, ...., \lambda_P - \sigma\}$$

wobei $\lambda_1$ und $\lambda_P$ die Eigenwerte der spektralen Matrix ($\underline{\Gamma}$) der Ordungszahlen 1 bis P sind und

$$\sigma = (\lambda_{P+1} + ... + \lambda_N)/(N - P)$$

gilt, wobei $\lambda_{P+1}$ bis $\lambda_N$ Eigenwerte der spektralen Matrix ($\Gamma$) der Ordnungszahlen (P+1) bis N sind, und daß sie die Maxima der Funktion $f(\theta)$ bestimmt, die der Kehrwert des kleinsten Eigenwerts der folgenden Matrix ist:

$$\left[\underline{U}^* (\sin\theta\, \underline{U}_1 - \cos\theta\, \underline{U}_2)\, \underline{\Lambda}\, (\sin\theta\, \underline{U}_1 - \cos\theta\, \underline{U}_2)^*\, \underline{U}\right]$$

wobei die Werte von $\theta_P$, die den Maxima der Funktion $f(\theta)$ zugeordnet sind, den Azimutwerten der P Geräuschquellen entsprechen.

**9.** Anordnung nach einem der Ansprüche 6 bis 8, dadurch gekennzeichnet, daß jeder akustische Richtaufnehmer durch ein Paar Hydrophon-Dubletten gebildet ist, wobei jeder Aufnehmer zwei Achsen mit zueinander senkrechten Richtwirkungen ("Ost-West", "Nord-Süd") besitzt, so daß ein Doppelacht-Richtdiagramm definiert wird, und daß die Aufnehmer jeweils in einer Boje angeordnet sind, die mit Mitteln ausgestattet ist, die ein Signal ($K_n$) erzeugen, das den Kurs bezüglich der magnetischen Nordrichtung darstellt.

**10.** Anordnung nach einem der Ansprüche 6 bis 8, dadurch gekennzeichnet, daß jeder akustische Richtaufnehmer durch ein Paar Hydrophon-Dubletten gebildet ist, wobei jeder Aufnehmer zwei Achsen mit zueinander senkrechten Richtwirkungen ("Ost-West", "Nord-Süd") besitzt, so daß ein Doppelacht-Richtdiagramm definiert wird, und daß die Aufnehmer eine lineare Antenne vorbestimmter Länge bilden, die Mittel enthält, welche Signale erzeugen, die die jedem der Aufnehmer zugeordneten Kurse in bezug auf die magnetische Nordrichtung darstellen.

## Claims

**1.** Process for locating noise emitters with an antenna consisting of N directional acoustic sensors associated with N transducers of sound signals received from each noise emitter; each of the said acoustic sensors being furnished with means generating a magnitude representing the heading ($K_n$) relative to terrestrial magnetic North; characterized in that, the said directional sensors consisting of a pair of dipoles exhibiting a double-eight directivity diagram (X-X', Y-Y'), the maxima of which are aligned with mutually orthogonal first and second axes ("EAST-WEST", "NORTH-SOUTH"), this process comprises at least the following steps:

- generation by each sensor of a pair of analog signals ($a_n$, $b_n$), the responses of the dipoles along the said first and second orthogonal axes
- rotation of each of the pairs of signals by an angle $K_n$, with $K_n$ the heading of buoy n and $1 \leq n \leq N$, so as to generate a new pair of signals $x_n(t)$ and $y_n(t)$, such that, $A_n(t)$ being the signal associated with the first axis and $B_n(t)$ the signal associated with the second axis, the following relation holds:

$$\begin{bmatrix} x_n(t) \\ y_n(t) \end{bmatrix} = \begin{bmatrix} \cos(K_n) & -\sin(K_n) \\ \sin(K_n) & \cos(K_n) \end{bmatrix} \begin{bmatrix} A_n(t) \\ B_n(t) \end{bmatrix}$$

- sampling with the aid of a signal of specified frequency ($T_e$) of these signals and their conversion into digital signals ($\underline{X}(n)$)
- generation of the spectral matrix ($\underline{\Gamma}$) of the signals thus converted
- decomposition of the spectral matrix ($\underline{\Gamma}$) into eigenelements ($\underline{u}_1$ to $\underline{u}_{2N}$, $\lambda_1$ to $\lambda_{2N}$)
- estimation of the number P of noise emitters by determining the multiplicity of the smallest eigenvalue of the spectral matrix
- generation of at least two matrices, $\underline{U}_1$ and $\underline{U}_2$, with N rows and P columns, N and P being respectively the number of buoys and the number of estimated noise emitters, such that the following relation is satisfied:

$$\begin{bmatrix} \underline{U}_1 \\ \underline{U}_2 \end{bmatrix} = [\underline{u}_1 \vdots \underline{u}_2 \vdots \cdots \vdots \underline{u}_p]$$

  in which $\underline{u}_1$ to $\underline{u}_p$ are the eigenvectors of the spectral matrix ($\underline{\Gamma}$)
- generation of a third matrix U, likewise with N rows and P columns, such that the columns form an orthonormal basis common to the vector spaces spanned by the columns of the matrices $\underline{U}_1$ and $\underline{U}_2$
- and the locating of the said P noise emitters by using at least the matrices $\underline{U}$, $\underline{U}_1$ and $\underline{U}_3$; the said locating consisting in generating a sequence of values ($\theta_1$ to $\theta_p$) representing the estimated azimuths of the noise emitters, modulo 180°.

**2.** Process according to Claim 1, characterized in that the step of locating the said P noise emitters comprises the following phases:

- a first phase of generating the P eigenvalues of the matrix defined by the relation:

$$\left[(\underline{U}_1 + i\underline{U}_2)^* \underline{U}\right]^{-1} \times \left[(\underline{U}_1 - i\underline{U}_2)^* \underline{U}\right]$$

  a relation in which $(\underline{U}_1 + i\underline{U}_2)*$ is the conjugate matrix of $(\underline{U}_1 + i\underline{U}_2)$
- and a second phase of generating the said azimuths, the azimuth $\theta_p$ of a noise emitter p, with $1 < p < P$, being such that:

$$\theta_p = \frac{1}{2} \operatorname{Arg}(\alpha_p)$$

  $\alpha_p$ being the eigenvalue of rank p of the matrix generated in the first phase.

**3.** Process according to Claim 1, characterized in that it comprises a further step of generating a diagonal matrix $\underline{\Lambda}$ complying with the following relation:

$\underline{\Lambda} = \text{diag}\{\lambda_1 - \sigma, ..., \lambda_P - \sigma\}$ in which $\lambda_1$ to $\lambda_p$ are the eigenvectors of ranks 1 to P of the said spectral matrix ($\Gamma$) and $\sigma$ is given by the relation $\sigma = (\lambda_{P+1} + ... + \lambda_N)/(N - P)$ and in that the locating of the said P noise emitters comprises the following phases:

- generation of the function $f(\theta)$ such that $f(\theta)$ is the inverse of the smallest eigenvalue of the matrix:

$$\left[\underline{U}^* (\sin\theta\, \underline{U}_1 - \cos\theta\, \underline{U}_2)\, \underline{\Lambda}\, (\sin\theta\, \underline{U}_1 - \cos\theta\, \underline{U}_2)^* \underline{U}\right]$$

- and determination of the maxima of this function within a specified range of the angle $\theta$, the values $\theta_p$ of these maxima representing the azimuths of the said P noise emitters ($\theta_1$ to $\theta_P$), modulo 180°.

**4.** Process according to Claim 2, characterized in that the said specified range comprises the angles $\theta$ varying from -90° to +90°.

**5.** Process according to Claim 1, characterized in that the said third matrix $\underline{U}$ is formed by the P left singular vectors associated with the P largest values of the matrix $[\underline{U}_1 \vdots \underline{U}_2]$, a matrix containing N rows and 2P columns and $\underline{U}_1$, $\underline{U}_2$ being the said first and second matrices.

**6.** Device for implementing the process for locating noise emitters according to any one of Claims 1 to 5, characterized in that it comprises first means (1.1 to 1.N), equal in number to the said number N, for amplifying and filtering the pairs of analog signals ($a_n$, $b_n$), second means (2.1 to 2.N) for rotating each of the pairs of signals thus amplified and filtered by an angle representing the magnetic heading ($K_n$) associated with the directional sensor generating the said pair of analog signals, third means (3) converting the pairs of signals into vectorial digital samples, fourth means (4) generating the said spectral matrix ($\underline{\Gamma}$) of these samples, fifth means (5) decomposing this spectral matrix ($\underline{\Gamma}$) into eigenelements ($\underline{u}_1$ to $\underline{u}_{2N}$, $\lambda_1$ to $\lambda_{2N}$), sixth means (6) estimating from these eigenelements the number P of noise emitters and generating at least a first and a second matrix $\underline{U}_1$ and $\underline{U}_2$, obeying the relation:

$$\begin{bmatrix} \underline{U}_1 \\ \underline{U}_2 \end{bmatrix} = [\underline{u}_1 \vdots \underline{u}_2 \vdots \cdots \vdots \underline{u}_P]$$

in which $\underline{u}_1$ to $\underline{u}_p$ are the eigenvectors of the said spectral matrix ($\underline{\Gamma}$); seventh means (7) generating from the said first and second matrix a third matrix $\underline{U}$ such that its columns form an orthonormal basis common to the vector spaces spanned by the columns of the matrices $\underline{U}_1$ and $\underline{U}_2$; and eighth means (8 or 9) performing the locating of the P noise emitters from at least the said first, second and third matrix ($\underline{U}_1$, $\underline{U}_2$, U).

**7.** Device according to Claim 6, characterized in that the eighth means (8) performing the locating of the P noise emitters generate P eigenvalues $\alpha_1$ to $\alpha_P$ of the matrix

$$\left[(\underline{U}_1 + i\,\underline{U}_2)^* \underline{U}\right]^{-1} \cdot \left[(\underline{U}_1 - i\,\underline{U}_2)^* \underline{U}\right]$$

and estimate the azimuths $\theta_1$ to $\theta_P$ of the P noise emitters by performing the successive calculations

$$\theta_p = \frac{1}{2} \text{Arg}\,(\alpha_p),$$

with $1 \leq p \leq P$.

**8.** Device according to Claim 6, characterized in that the sixth means (6) furthermore generate a diagonal matrix $\underline{\Lambda}$ such that

$$\underline{\Lambda} = \text{diag}\,\{\lambda_1 - \sigma, \lambda_2 - \sigma, ...., \lambda_p - \sigma\}$$

with $\lambda_1$ and $\lambda_P$ the eigenvalues of the spectral matrix ($\underline{\Gamma}$) of rank 1 to P; and $\sigma = (\lambda_{P+1} + ... + \lambda_N)/(N-P)$, with $\lambda_{P+1}$ to $\lambda_N$ the eigenvalues of the spectral matrix ($\Gamma$) of rank (P + 1) to N; and in that it determines the maxima of the function $f(\theta)$, the inverse of the smallest eigenvalue of the matrix:

$$\left[\underline{U}^{*}\left(\sin\theta\,\underline{U}_1-\cos\theta\,\underline{U}_2\right)\underline{\Lambda}\left(\sin\theta\,\underline{U}_1-\cos\theta\,\underline{U}_2\right)^{*}\underline{U}\right]$$

the values of $\theta_p$ associated with the maxima of the said function $f(\theta)$ corresponding to the azimuths of the P noise emitters.

**9.** Device according to any one of Claims 6 to 8, characterized in that each directional acoustic sensor consists of a pair of hydrophone dipoles, each sensor having two orthogonal directivity axes ("East-West", "North-South"), such as to define a double-eight directivity diagram; and in that each of these sensors is arranged in a buoy furnished with means generating a signal ($K_n$) representing the heading relative to magnetic North.

**10.** Device according to any one of Claims 6 to 8, characterized in that each directional acoustic sensor consists of a pair of hydrophone dipoles, each sensor having two orthogonal directivity axes ("East-West", "North-South"), such as to define a double-eight directivity diagram; and in that these sensors form a filar antenna of specified length comprising means generating signals representing the headings relative to magnetic North and associated with each of these sensors.

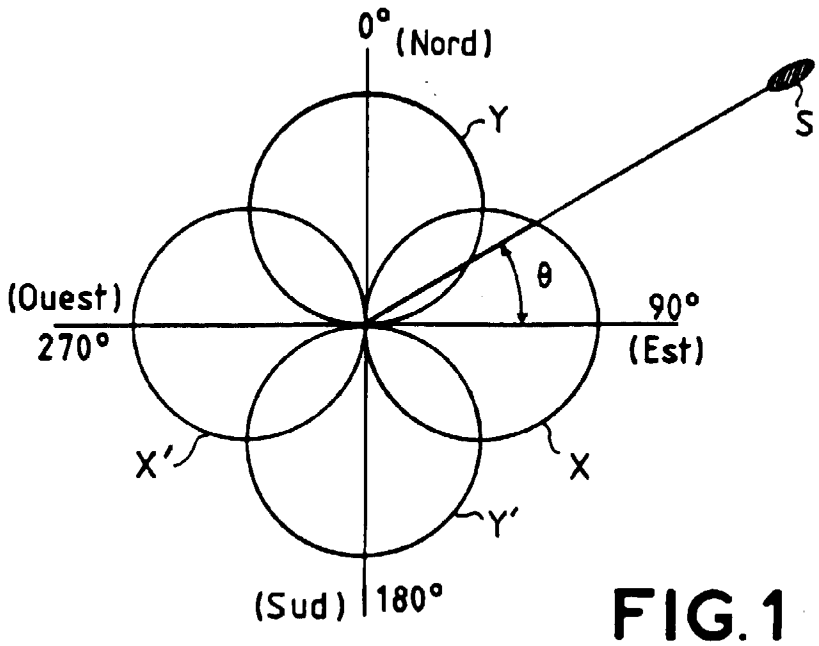


FIG. 1

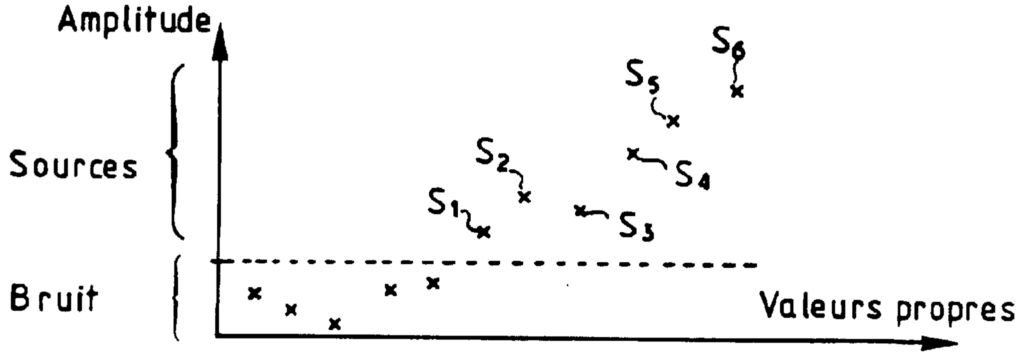


FIG. 3

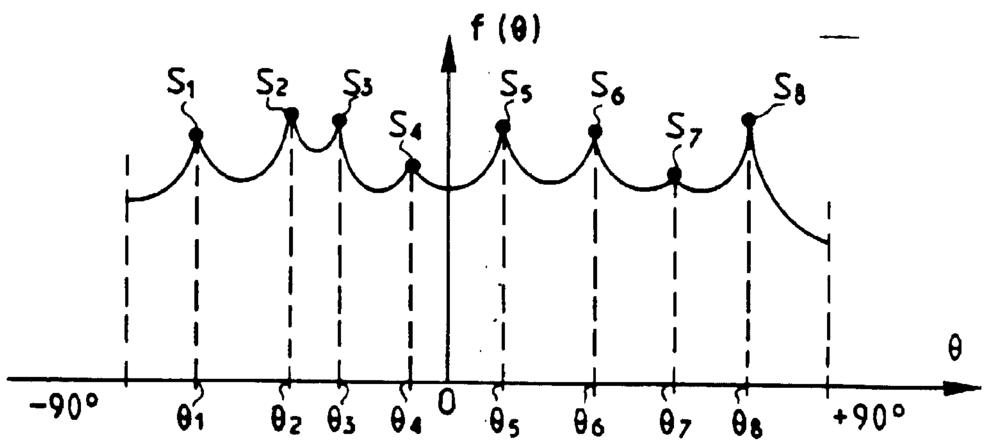


FIG. 4

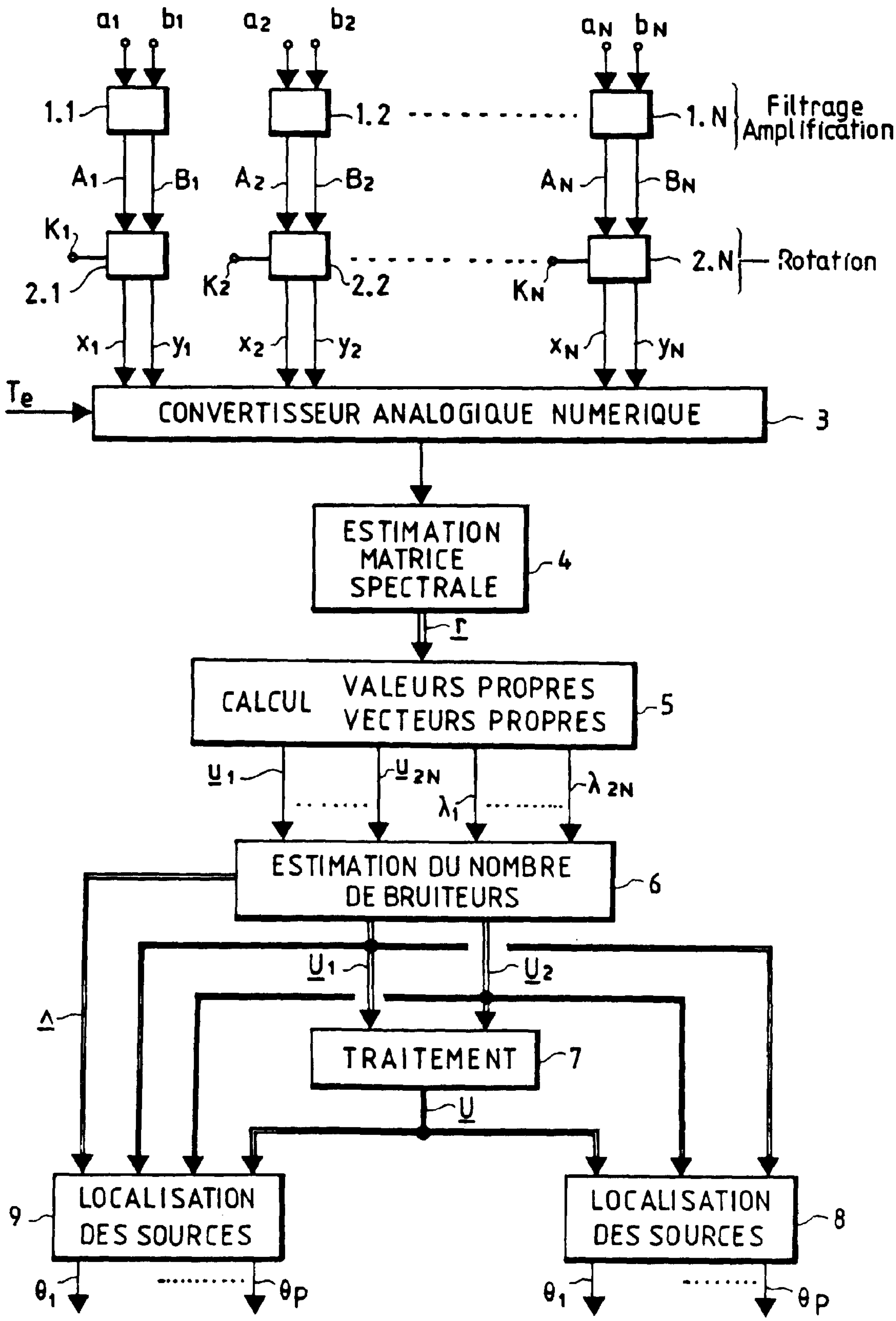
a1 b1
a2 b2
aN bN
1.1
1.2
1.N
Filtrage
Amplification
A1
B1
A2
B2
AN
BN
K1
K2
KN
2.1
2.2
2.N
Rotation
x1
y1
x2
y2
xN
yN
Te
CONVERTISSEUR ANALOGIQUE NUMERIQUE
3
ESTIMATION MATRICE SPECTRALE
4
r
CALCUL VALEURS PROPRES VECTEURS PROPRES
5
u1
u2N
λ1
λ2N
ESTIMATION DU NOMBRE DE BRUITEURS
6
Λ
U1
U2
TRAITEMENT
7
U
LOCALISATION DES SOURCES
9
LOCALISATION DES SOURCES
8
θ1
θp
θ1
θp

FIG.2